# EUROPEAN PATENT SPECIFICATION

(11) **EP 1 829 453 B1**
(45) Date of publication and mention of the grant of the patent: **29.06.2011**
(21) Application number: 07103188.4
(22) Date of filing: 28.02.2007
(51) Int. Cl.: A23G 9/28, G07F 9/02

(54) **Automatic machine for producing and dispensing semi-liquid foodstuffs**
Automatische Maschine zur Herstellung und Ausgabe halbflüssiger Nahrungsmittel
Machine automatique pour produire et distribuer des aliments semi-liquides

(30) Priority: 28.02.2006 IT BO20060145
(43) Date of publication of application: 05.09.2007
(73) Proprietor: ALI S.p.A, 20123 Milano (IT)
(72) Inventor: Cocchi, Gino, 40137, Bologna (IT); Zaniboni, Gianni, 40037, Borgonuovo di Sasso Marconi Bologna (IT)
(74) Representative: Ghioni, Carlo Raoul Maria

(56) References cited:
- EP-A1- 0 330 252
- US-A- 5 027 698
- US-A- 5 501 367
- US-B1- 6 637 214
- DATABASE WPI Week 200564 Derwent Publications Ltd., London, GB; AN 2005-630405 XP002444848 & WO 2005/080915 A1 (BROTHER KOGYO KK) 1 September 2005 (2005-09-01)

## Description

The present invention relates to an automatic machine for producing and dispensing semi-liquid foodstuffs.

In particular, without limiting the scope of the inventive concept, the present invention relates to machines for producing and dispensing ice creams, soft ice creams, yoghurt ice creams, sorbets and the like.

As is known, machines of the above-mentioned type, in particular those for producing soft ice creams referred to hereinafter by way of example, comprise a tank for containing a liquid mixture to be processed to obtain the finished product, refrigerating means associated with the tank to keep the mixture at a predetermined temperature, a horizontal whipping and freezing cylinder, to which the mixture is fed by a gear pump, and one or more dispenser taps, positioned on the whipping and freezing cylinder outfeed front wall. The gear pump pressurises the mixture with air, making the ice cream more or less creamy.

The dispenser taps may be operated manually, or, in the case of the automatic dispensing machines covered by this invention, they may be controlled by a control unit operating in conjunction with one or more sensors which detect the quantity of ice cream dispensed.

As is known, said sensors consist of devices designed to detect the weight of the ice cream dispensed, for example load cells.

In other cases there are devices equipped with volumetric sensors able to control the quantity of ice cream dispensed.

The density of the ice cream is normally electronically controlled during production to prevent it from varying, for example with variations in the type of mixture. However, even small variations in the density can result in unacceptable variations in the volume of the ice cream dispensed.

Moreover, it is important to consider that the types of devices described above are relatively complex, expensive and present objective difficulties in terms of manual and automatic washing.

The aim of the present invention is to produce an automatic machine for producing and dispensing semi-liquid foodstuffs which is free of the above-mentioned disadvantage.

Accordingly, the present invention provides an automatic machine for producing and dispensing semi-liquid foodstuffs comprising the features described in one or more of the claims herein.

The present invention is now described, by way of example and without limiting the scope of application, with reference to the accompanying drawings, in which:
- Figure 1 is a front view, with some parts schematically illustrated as blocks, of an embodiment of the machine in accordance with the present invention;
- Figure 2 is a top view, with some parts in cross-section, of the machine of Figure 1;
- Figure 3 is a side view, with some parts in cross-section, of the machine of Figure 1;
- Figures 4 and 5 are respectively a schematic side view and plan view of a portion of the machine of Figure 1; and
- Figure 6 is a schematic view of an alternative embodiment of what is illustrated in Figure 4.

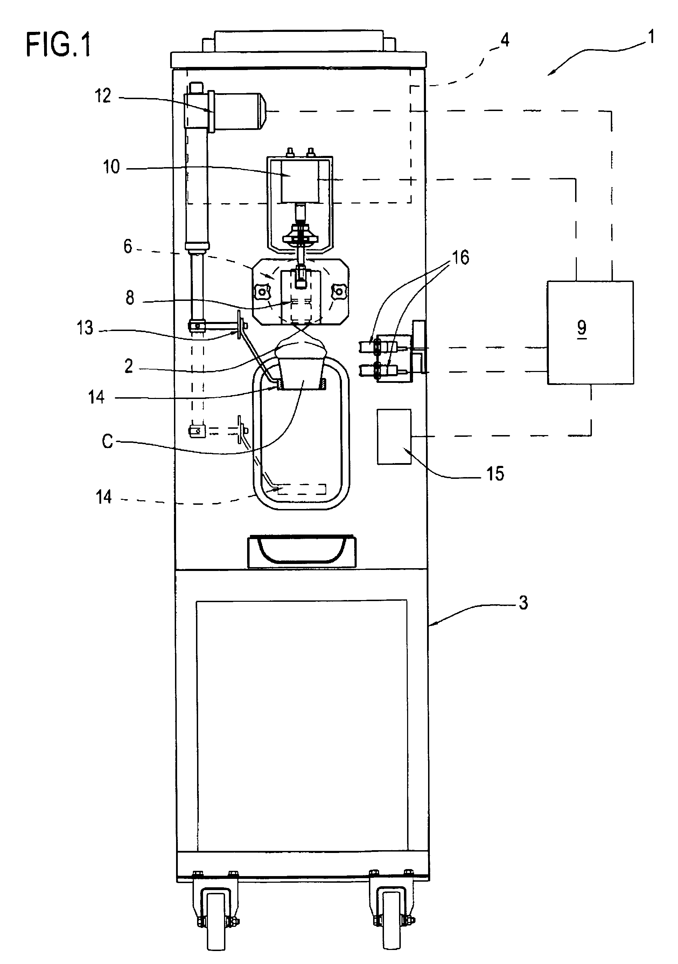

With reference to Figures 1 to 3, the numeral 1 denotes as a whole an automatic machine for producing and dispensing semi-liquid foodstuffs, in particular soft ice creams 2.

The machine 1 comprises a frame 3 which substantially has the shape of a parallelepiped and supports, at the top, a tank 4 for containing a basic product, in the form of a liquid mixture, to be processed to obtain the ice creams 2.

Associated with the tank 4 there is a circuit 5 of a refrigerating system for keeping the mixture at a predetermined temperature, in particular around 4°C.

Below the tank 4, the frame 3 supports a horizontal whipping and freezing cylinder 6, of the known type, to which the mixture is fed by a gear pump 7, positioned at the tank 4 and in communication with the tank via a suction pipe 7a for drawing the mixture from the tank 4 and sending it by means of a delivery pipe 7b to a whipping and freezing cylinder 6 infeed 6a.

Inside the cylinder 6 there is a mixing blade 6b for the product processed, which is driven in rotation about its axis by a variable speed motor unit 6c and can push the product towards and into a dispenser tap 8 mounted on the whipping and freezing cylinder 6 outfeed front wall. The dispenser tap 8 is checked and controlled by a control unit 9 (Figures 1, 4, 5 and 6) with an actuator 10 inserted between them.

It should be noticed that the pump 7, the suction pipe 7a, the delivery pipe 7b and the cylinder 6 as a whole form a feed and processing circuit 11 for the above-mentioned mixture.

As illustrated in Figure 1, the control unit 9 also checks and controls, using another actuator 12 inserted in-between, a carriage 13 for supporting a plate 14 on which a container C is stably rested, for example a glass, a cup or a cone, into which the ice cream 2 is dispensed.

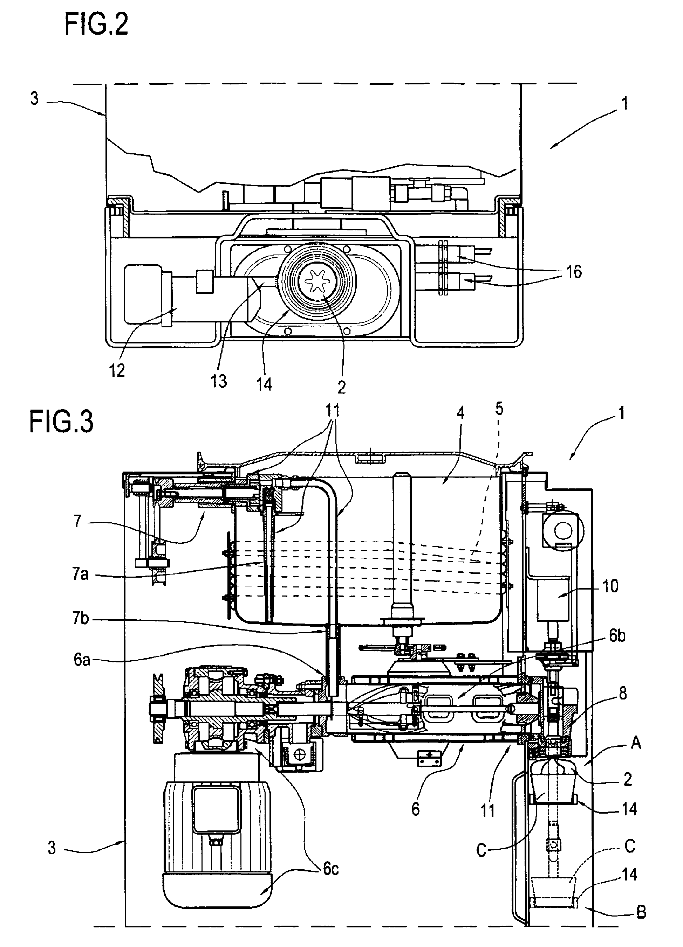

The plate 14 can move between an upper station A for ice cream 2 dispensing and a lower station B from which the ice cream 2 is picked up by the consumer (Figure 3).

The control unit 9 receives the consent to dispense an ice cream 2 from any sensor designed to serve the user, for example a coin box 15, or from a reader for keys with saved credit, and adjusts the dispensing based on the information received from a sensor 16 in a predetermined position close to the tap 8.

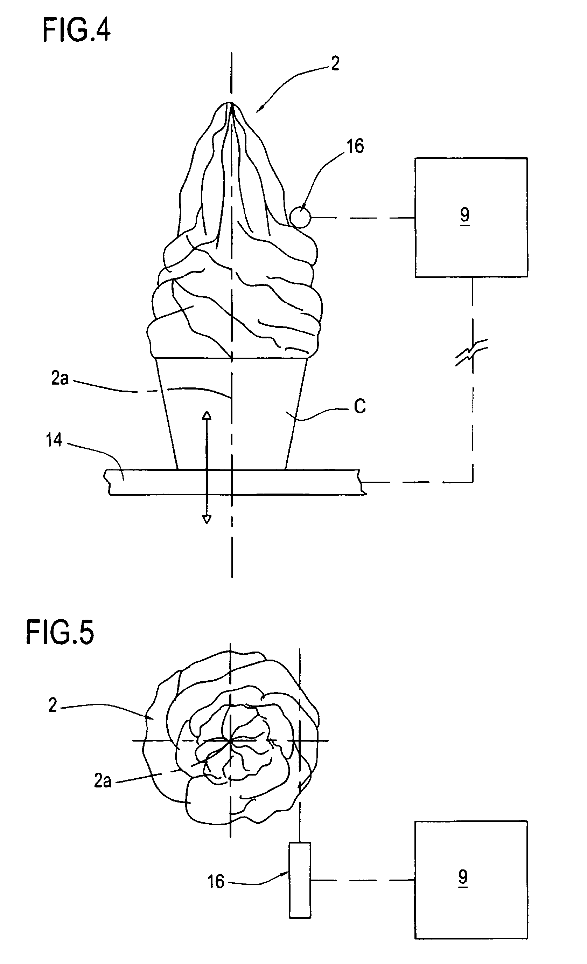

As shown more clearly in Figures 4 and 5, the sensor 16 is designed to detect at least part of the profile of the ice cream 2 dispensed and operates according to a line of action skew relative to the central axis 2a according to which the height of the ice cream 2 extends. The sensor 16 may be electro-optical, in particular a photocell, ultrasonic or a thermal sensor.

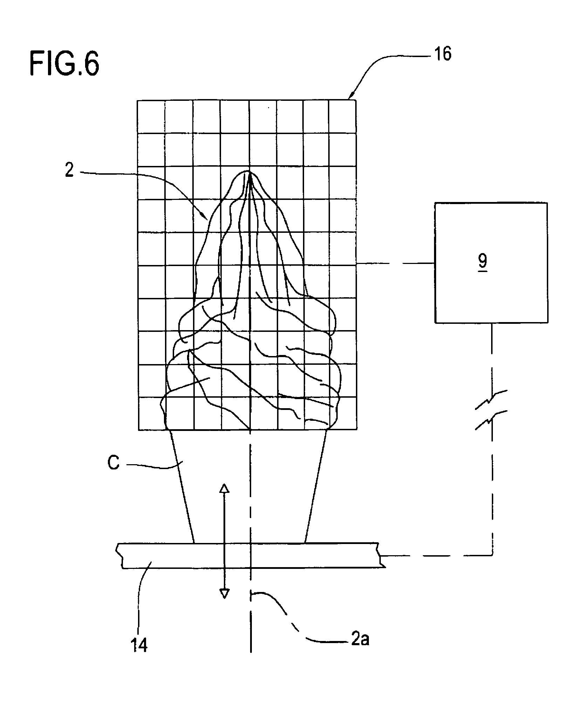

According to the alternative embodiment illustrated in Figure 6, the sensor 16 is of the electro-optical type, in particular a CCD type image detector, and operates according to a matrix of action substantially centred relative to the central axis 2a according to which the height of the ice cream 2 extends.

In the station A the control unit 9 places and holds the plate 14 in a predetermined position relative to the sensor 16 during ice cream 2 dispensing.

During operation, after dispensing consent has been supplied by the sensor 15 of any type at the service of the user, the user takes a container C from a stack positioned in a suitable magazine - distributor (not illustrated) in the machine 1 and places the container C on the plate 14 which is at the station A, at a predetermined height relative to the sensor 16 for the size selected.

It should be noticed that, in an automatic form, it is the control unit 9 which serves a glass, cone or the like, in the station A by means of the plate 14 which, as indicated above, is positioned at the predetermined height relative to the sensor 16 for the size selected.

In both cases, said height is clearly greater for a small size and less for a large size.

As illustrated in Figure 1, one of the two sensors 16, for example the lower one as seen in Figure 1, is a container C presence sensor and allows correct container C positioning on the plate 14 to be checked. If correct container positioning is not detected, the sensor 16, by means of the control unit 9, stops product 2 dispensing. Obviously, the presence sensor may also consist of any sensor positioned at another point of the machine but always able to perform the checks described above.

Once ice cream 2 dispensing has started, the sensor 16 sends an end dispensing signal when it intercepts the profile of the ice cream 2 dispensed. This interception may be optical, ultrasonic or thermal, depending on the type of sensor 16 mounted at the station A.

When ice cream 2 dispensing has stopped, the control unit 9 moves the plate 14 to the station B so that the consumer can pick up the ice cream 2.

As illustrated in Figures 1 and 2, in addition to the sensor 16 described above, close to the dispenser tap 8 there may be, in a different position, for example at a different height and/or a different distance from the front of the machine 1, another sensor 16, so that the two sensors 16 can detect at least part of the profile of an ice cream 2 dispensed according to respective sizes if the plate 14 is placed in a single position in the station A, or for more accurate detection of the profile of the ice cream 2 during dispensing. In the latter case, each sensor 16 detects a respective part of the profile of the ice cream 2 dispensed.

According to other alternative embodiments, not illustrated but within the scope of the present invention, close to the tap 8 there may also be more than two sensors 16.

Finally, mounted on the whipping and freezing cylinder 6 outfeed front wall there may be two or more dispenser taps 8.

## Claims

1. An automatic machine for producing and dispensing semi-liquid foodstuffs, comprising a tank (4) for containing a product to be processed to obtain the products (2), a feed and processing circuit (11) for said product to be processed, dispensing means (8) positioned at an outfeed end of the feed and processing circuit (11), first actuator means (10) for operating the dispensing means (8), check and control means (9) for the first actuator means (10) and sensor means (16) for detecting the quantity of product (2) dispensed, associated with the check and control means (9); the machine being **characterised in that** the sensor means (16) comprise at least one device (16) designed to detect at least part of the profile of the product (2) dispensed.

2. The machine according to claim 1, **characterised in that** the sensor means (16) are of the electro-optical type.

3. The machine according to claim 2, **characterised in that** the sensor means (16) comprise at least one photocell.

4. The machine according to claim 2, **characterised in that** the sensor means (16) comprise at least one CCD type image detector.

5. The machine according to claim 1, **characterised in that** the sensor means (16) are of the ultrasonic type.

6. The machine according to claim 1, **characterised in that** the sensor means (16) are of the thermal type.

7. The machine according to claim 1, **characterised in that** the device (16) designed to detect at least part of the profile of the product (2) dispensed operates according to a line of action skew relative to the central axis according to which the height of the product (2) dispensed extends.

8. The machine according to any of the claims from 1 to 7, **characterised in that** it comprises means (13, 14) for supporting the product (2) dispensed and second actuator means (12) controlled by the check and control means (9) for placing and holding the supporting means (13, 14) in a predetermined position relative to the sensor means (16) during product (2) dispensing.

9. The machine according to claim 8, **characterised in that** the means (13, 14) for supporting the product (2) dispensed can move between an upper station (A) for product (2) dispensing and a lower station (B) from which the product (2) is picked up by the consumer.

10. The machine according to any of the claims from 1 to 9, **characterised in that** the sensor means (16) comprise at least two devices (16) designed to detect at least part of the profile of the product (2) dispensed; each of the devices (16) being designed to detect at least part of the profile of a product (2) dispensed according to a respective size or to detect a respective part of the profile of a product (2) dispensed.

11. The machine according to any of the foregoing claims from 1 to 10, **characterised in that** at least one of the sensors (16) is for detecting the presence of a product (2) container (C), said sensor sending a signal to the check and control means (9) if the container (C) is missing and/or incorrectly positioned, so as to interrupt product dispensing.

## Patentansprüche

1. Automatische Maschine zur Herstellung und Ausgabe halbflüssiger Nahrungsmittel, umfassend einen Tank (4) zur Aufbewahrung eines zu verarbeitenden Produkts zum Erhalt der Produkte (2), einen Zuführ- und Verarbeitungskreislauf (11) für das zu verarbeitende Produkt, Ausgabemittel (8), die an einem Ausführende des Zuführ- und Verarbeitungskreislaufs (11) positioniert sind, erste Antriebsmittel (10) zum Betrieb der Ausgabemittel (8), Kontroll- und Steuermittel (9) für die ersten Antriebsmittel (10) und Sensormittel (16) zur Erfassung der ausgegebenen Menge von Produkten (2), die mit den Kontroll- und Steuermitteln (9) verbunden sind, wobei die Maschine **dadurch gekennzeichnet ist, dass** die Sensormittel (16) mindestens eine Vorrichtung (16) umfassen, die zum Erfassen mindestens eines Teils des Profils des ausgegebenen Produkts (2) konzipiert ist.

2. Maschine nach Anspruch 1, **dadurch gekennzeichnet, dass** die Sensormittel (16) des elektrooptischen Typs sind.

3. Maschine nach Anspruch 2, **dadurch gekennzeichnet, dass** die Sensormittel (16) mindestens eine Fotozelle umfassen.

4. Maschine nach Anspruch 2, **dadurch gekennzeichnet, dass** die Sensormittel (16) mindestens einen Bilddetektor vom CCD-Typ umfassen.

5. Maschine nach Anspruch 1, **dadurch gekennzeichnet, dass** die Sensormittel (16) des Ultraschall-Typs sind.

6. Maschine nach Anspruch 1, **dadurch gekennzeichnet, dass** die Sensormittel (16) des thermischen Typs sind.

7. Maschine nach Anspruch 1, **dadurch gekennzeichnet, dass** die Vorrichtung (16), die zum Erfassen mindestens eines Teils des Profils des ausgegebenen Produkts (2) konzipiert ist, gemäß einer Vorgehensweise in Betrieb ist, die in Bezug auf die Mittelachse schräg ist, gemäß der sich die Höhe des ausgegebenen Produkts (2) ausdehnt.

8. Maschine nach einem der Ansprüche 1 bis 7, **dadurch gekennzeichnet, dass** sie Mittel (13, 14) zum Tragen des ausgegebenen Produkts (2) und zweite Antriebsmittel (12) umfasst, die durch die Kontroll- und Steuermittel (9) zum Platzieren und Halten der Tragemittel (13, 14) in einer vorbestimmten Position in Bezug auf die Sensormittel (16) während der Ausgabe der Produkte (2) gesteuert werden.

9. Maschine nach Anspruch 8, **dadurch gekennzeichnet, dass** sich die Mittel (13, 14) zum Tragen des ausgegebenen Produkts (2) zwischen einer oberen Station (A) zur Ausgabe des Produkts (2) und einer unteren Station (B), von der das Produkt (2) vom Verbraucher aufgenommen wird, bewegen können.

10. Maschine nach einem der Ansprüche 1 bis 9, **dadurch gekennzeichnet, dass** die Sensormittel (16) mindestens zwei Vorrichtungen (16) umfassen, die zum Erfassen mindestens eines Teils des Profils des ausgegebenen Produkts (2) konzipiert sind, wobei jede der Vorrichtungen (16) so konzipiert ist, dass sie mindestens einen Teil des Profils eines ausgegebenen Produkts (2) gemäß einer entsprechenden Größe erfasst oder einen entsprechenden Teil des Profils eines ausgegebenen Produkts (2) erfasst.

11. Maschine nach einem der vorangehenden Ansprüche 1 bis 10, **dadurch gekennzeichnet, dass** mindestens einer der Sensoren (16) zur Erfassung des Vorhandenseins eines Behälters (C) eines Produkts (2) dient, wobei der Sensor ein Signal an die Kontroll- und Steuermittel (9) sendet, wenn der Behälter (C) fehlt und/oder falsch positioniert ist, so dass die Ausgabe des Produkts unterbrochen wird.

## Revendications

1. Machine automatique pour produire et distribuer des aliments semi-liquides, comprenant un réservoir (4) pour contenir un produit à traiter pour obtenir les produits (2), un circuit d'alimentation et de traitement (11) pour ledit produit à traiter, des moyens de distribution (8) placés à une extrémité avale du circuit d'alimentation et de traitement (11), des premiers moyens d'actionnement (10) pour piloter les moyens de distribution (8), des moyens de contrôle et de commande (9) pour les premiers moyens d'actionnement (10) et des moyens de détection (16) pour détecter la quantité de produit (2) distribué, associés à des moyens de contrôle et de commande (9) ; la machine **se caractérisant en ce que** les moyens de détection (16) comprennent au moins un dispositif (16) fait pour détecter au moins une partie du profil du produit (2) distribué.

2. Machine selon la revendication 1, **caractérisée en ce que** les moyens de détection (16) sont de type électro-optique.

3. Machine selon la revendication 2, **caractérisée en ce que** les moyens de détection (16) comprennent au moins une cellule photoélectrique.

4. Machine selon la revendication 2, **caractérisée en ce que** les moyens de détection (16) comprennent au moins un capteur d'image de type CCD.

5. Machine selon la revendication 1, **caractérisée en ce que** les moyens de détection (16) sont de type ultrasonique.

6. Machine selon la revendication 1, **caractérisée en ce que** les moyens de détection (16) sont de type thermique.

7. Machine selon la revendication 1, **caractérisée en ce que** le dispositif (16), fait pour détecter au moins une partie du profil du produit (2) distribué, suit une ligne d'action en biais par rapport à l'axe central du développement en hauteur du produit (2) distribué.

8. Machine selon l'une quelconque des revendications 1 à 7, **caractérisée en ce qu'**elle comprend des moyens (13, 14) pour soutenir le produit (2) distribué et des deuxièmes moyens d'actionnement (12) pilotés par les moyens de contrôle et de commande (9) pour placer et pour maintenir les moyens de support (13, 14) dans une position prédéterminée par rapport aux moyens de détection (16) pendant la distribution du produit (2).

9. Machine selon la revendication 8, **caractérisée en ce que** les moyens (13, 14) pour soutenir le produit (2) distribué peuvent se déplacer entre un poste en amont (A) de distribution du produit (2) et un poste en aval (B), où est prélevé le produit (2) par le consommateur.

10. Machine selon l'une quelconque des revendications 1 à 9, **caractérisée en ce que** les moyens de détection (16) comprennent au moins deux dispositifs (16) faits pour détecter au moins une partie du profil du produit (2) distribué ; chaque dispositif (16) étant fait pour détecter au moins une partie du profil d'un produit (2) distribué en fonction d'une taille respective ou pour détecter une partie respective du profil d'un produit (2) distribué.

11. Machine selon l'une quelconque des revendications précédentes 1 à 10, **caractérisée en ce qu'**au moins l'un des capteurs (16) détecte la présence d'un conteneur (C) de produit (2), ledit capteur envoyant un signal aux moyens de contrôle et de commande (9) si le conteneur (C) est absent et/ou mal positionné, de sorte à interrompre la distribution du produit.
